# EUROPÄISCHE PATENTANMELDUNG

(11) **EP 4 714 676 A1**
(43) Veröffentlichungstag der Anmeldung: **25.03.2026**
(21) Anmeldenummer: 25202155.5
(22) Anmeldetag: 15.09.2025
(51) Int. Cl.: B60C 11/01, B60C 11/13

(54) **FAHRZEUGLUFTREIFEN**

(30) Priorität: 19.09.2024 DE 102024208970
(71) Anmelder: Continental Reifen Deutschland GmbH, 30175 Hannover (DE)
(72) Erfinder: Rittweger, Stefan, 30175 Hannover (DE); Hajduch, Jaroslav, 020 01 Púchov (SK); Kvasnica, Milan, 020 01 Púchov (SK)
(74) Vertreter: Continental Corporation

(57) **Zusammenfassung**

Die Erfindung betrifft einen Fahrzeugluftreifen (1), umfassend einen Laufstreifen (2) und Seitenwände, wobei der Laufstreifen (2) einen Schulterabschnitt (3) mit mehreren schulterseitigen Profilsegmente (4, 5) sowie je zwei in Umfangsrichtung (6) des Fahrzeugluftreifens (1) benachbarte Profilsegmente (4, 5) trennende Aussparungen (7) aufweist, wobei sich der Schulterabschnitt (3) vom seitlichen Rand (8) einer Bodenaufstandsfläche des Laufstreifens (2) in Richtung zur jeweiligen Seitenwand erstreckt, wobei die jeweilige Aussparung (7) des Schulterabschnitts (3) radial durch eine Unterkontur (9) und in Umfangsrichtung (6) durch an den benachbarten Profilsegmenten (4, 5) ausgebildete Flanken (10, 11) begrenzt ist, wobei die Unterkontur (9) der jeweiligen Aussparung (7) unter Anbindung an die erste und/oder zweite Flanke (10, 11) eine Oberflächenstruktur mit einer Vielzahl von wenigstens teilringartigen Erhebungselementen (12, 13) aufweist, wobei wenigstens eine Erhebung (14, 15) eines ersten und/oder zweiten Erhebungselements (12, 13) zusammen mit der ersten oder zweiten Flanke (10, 11) einen Oberflächenbereich (16, 17) umschließt, und wobei die wenigstens eine Erhebung (14, 15) des jeweiligen Erhebungselements (12, 13) gegenüber dem jeweiligen Oberflächenbereich (16, 17) sowie der Unterkontur (9) hervorstehend ausgebildet ist.

## Beschreibung

Die Erfindung betrifft einen Fahrzeugluftreifen, umfassend einen Laufstreifen und Seitenwände, wobei der Laufstreifen einen Schulterabschnitt mit mehreren schulterseitigen Profilsegmente sowie je zwei in Umfangsrichtung des Fahrzeugluftreifens benachbarte Profilsegmente trennende Aussparungen aufweist. Der Schulterabschnitt erstreckt sich vom seitlichen Rand einer Bodenaufstandsfläche des Laufstreifens in Richtung zur jeweiligen Seitenwand. Die jeweilige Aussparung des Schulterabschnitts ist radial durch eine Unterkontur und in Umfangsrichtung des Fahrzeugluftreifens durch an den benachbarten Profilsegmenten ausgebildete Flanken begrenzt.

Insbesondere sogenannte "All Terrain"-Reifen sowie "Mud Terrain"-Reifen unterliegen beim Geländegebrauch hohen Beanspruchungen. Ein durchrutschender Reifen in losem, groben Schotter kann dazu führen, dass Beschädigungen unter anderem im "Offshoulder"-Bereich des Fahrzeugluftreifens entstehen. Der Offshoulder-Bereich des Fahrzeugluftreifens bezeichnet den äußeren Bereich der Reifenlauffläche bzw. des Laufstreifens, der sich in der Nähe der Reifenschulter befindet, jedoch nicht direkt auf der Lauffläche liegt. Die Reifenschulter selbst ist der Übergangsbereich zwischen dem Laufstreifen des Reifens, die direkt mit der Fahrbahn in Kontakt steht, und der Seitenwand des Reifens. Im Geländegebrauch können sich Steine oder andere scharfkantige und/oder spitze Objekte am Fahrzeugluftreifen verhaken und in das Gummimaterial des Fahrzeugluftreifens eindrücken. Dort wo sich an einem Schulterabschnitt des Laufstreifens ein Profilsegment, beispielsweise als Block ausgeführt, befindet, ist das Gummi dicker und die Gefahr von Beschädigungen ist somit geringer. Zwischen den Blöcken kann ein Stein das vergleichsweise dünne Gummimaterial jedoch schneller beschädigen oder sogar durchstoßen. Dieser aussparende Bereich zwischen den Blöcken bzw. Profilsegmenten ist jedoch wichtig für die Traktionseigenschaften des Fahrzeugluftreifens bei weichem Untergrund.

Die EP 3 620 311 B1 offenbart beispielsweise einen Fahrzeugluftreifen mit einem Laufstreifen mit Profilpositiven, wie Profilbändern oder Profilblockreihen, welche über den Laufstreifenumfang gemäß einer Pitchfolge aus zumindest zwei Pitches mit unterschiedlichen Umfangslängen angeordnet sind. Der Fahrzeugluftreifen umfasst ferner zumindest eine auf Profiltiefe ausgeführte Umfangsrille mit einem Rillengrund, Rillenflanken und Rillenkanten, wobei am Rillengrund eine Vielzahl von voneinander beabstandeten, freistehenden Vorsprüngen ausgebildet ist, welche eine Höhe von 10% bis 30% der Profiltiefe, eine Breite von 25% bis 40% der Breite der Umfangsrille und eine Erstreckungslänge von 15% bis 40% der Umfangslänge des jeweiligen Pitches aufweisen. Seitlich jedes freistehenden Vorsprunges sind beide Rillenkanten der Umfangsrille derart abschnittsweise angefast, dass die Rillenflanken Fasen aufweisen, welche jeweils den freistehenden Vorsprung in Umfangsrichtung zumindest einseitig überragen, zur radialen Richtung unter einem Winkel von 35° bis 55° verlaufen und eine Breite von 1,2 mm bis 2,0 mm aufweisen.

Die Aufgabe der vorliegenden Erfindung besteht darin, einen Fahrzeugluftreifen mit einem verbesserten Schutz vor im Geländegebrauch am Reifen abrutschenden Steinen und/oder anderen scharfkantigen und/oder spitzen Objekten bereitzustellen. Die Aufgabe wird gelöst durch den Gegenstand von Patentanspruch 1. Bevorzugte Ausführungsformen sind Gegenstand der abhängigen Ansprüche.

Ein erfindungsgemäßer Fahrzeugluftreifen umfasst einen Laufstreifen und Seitenwände, wobei der Laufstreifen einen Schulterabschnitt mit mehreren schulterseitigen Profilsegmenten sowie je zwei in Umfangsrichtung des Fahrzeugluftreifens benachbarte Profilsegmente trennende Aussparungen aufweist, wobei sich der Schulterabschnitt vom seitlichen Rand einer Bodenaufstandsfläche des Laufstreifens in Richtung zur jeweiligen Seitenwand erstreckt, wobei die jeweilige Aussparung des Schulterabschnitts radial durch eine Unterkontur und in Umfangsrichtung durch an den benachbarten Profilsegmenten ausgebildete Flanken begrenzt ist, die Unterkontur der jeweiligen Aussparung unter Anbindung an die erste und/oder zweite Flanke eine Oberflächenstruktur mit einer Vielzahl von wenigstens teilringartigen Erhebungselementen aufweist, wobei wenigstens eine Erhebung eines ersten und/oder zweiten Erhebungselements zusammen mit der ersten oder zweiten Flanke einen Oberflächenbereich umschließt, und wobei die wenigstens eine Erhebung des jeweiligen Erhebungselements gegenüber dem jeweiligen Oberflächenbereich sowie der Unterkontur hervorstehend ausgebildet ist.

Die Unterkontur der bei Querschnittsbetrachtung in axialer Richtung bzw. quer zur Umfangsrichtung des Fahrzeugluftreifens im Wesentlichen U-förmig ausgebildeten Aussparung ist der nach radial außen gerichtete Grund der Aussparung bzw. Rillengrund zwischen den Profilsegmenten. Diese Begriffe sind entsprechend synonym verwendbar. Die Aussparung ist je nach Ausgestaltung der Profilsegmente als Querrille am Schulterabschnitt zu verstehen, die sich quer zu einer Umfangsrille des Laufstreifens bzw. im Wesentlichen in axialer Richtung des Fahrzeugluftreifens erstreckt. Die Aussparungen verlaufen in Abhängigkeit der Ausgestaltung der Profilsegmente in eine solche Richtung, dass sie eine Umfangsrille des Fahrzeugluftreifens direkt oder in einer gedachten Verlängerung kreuzen. Die Aussparungen können je nach Ausformung der Profilsegmente identisch ausgebildet sein. Auch im Querschnitt unterschiedlich ausgeformte Aussparungen sind denkbar.

Die Erhebungselemente in der Aussparung zwischen je zwei Profilsegmenten fungieren als Steinabweiser oder Steinauswerfer. Die Erhebungselemente sind als zusätzliches Material zwischen den blockartigen Profilsegmenten zu verstehen, womit die darunter liegende Stützstruktur des Fahrzeugluftreifens geschützt wird. Durch die Erhebungselemente als lokale Vorsprünge innerhalb der Aussparung kann ein Höhenunterschied zwischen der Unterkontur der Aussparung und der radialen Außenfläche des Profilsegments bzw. die nötige Profiltiefe erhalten bleiben, um die nötige Traktionsfähigkeit des Fahrzeugluftreifens sicherzustellen. Die Erhebungselemente verstärken den Bereich zwischen zwei Profilsegmenten im Schulterabschnitt und können während des Fahrbetriebs die Traktionseigenschaften auf weichem Untergrund verbessern. Der Schulterabschnitt des Laufstreifens ist als Offshoulder-Bereich des Laufstreifens zu verstehen. Über den Schulterabschnitt ist der Laufstreifen mit einer zugehörigen Seitenwand des Fahrzeugluftreifens verbunden. Der Laufstreifen kann in axialer Richtung des Fahrzeugluftreifens beiderends einen Schulterabschnitt aufweisen. Die Schulterabschnitte des Fahrzeugluftreifens können dabei um eine Mittellinie der Bodenaufstandsfläche des Laufstreifens spiegelverkehrt ausgebildet sein.

Der Oberflächenbereich des jeweiligen wenigstens teilringartigen Erhebungselements kann durch mindestens eine Erhebung wenigstens teilweise umschlossen sein. Eine Erhebung ist eine Struktur, die sich über das umgebende Niveau der Unterkontur der Aussparung nach radial und/oder axial außen hinaushebt bzw. erhebt. Dies kann eine linienförmige, teilkreisförmige oder beliebig geformte Ausprägung sein. Die Erhebung der wenigstens einen Erhebung ist einteilig mit dem übrigen Gummimaterial des Laufstreifens verbunden. Die Erhebung der wenigstens einen Erhebung kann zudem einteilig mit wenigstens einer der beiden Profilsegmente im Schulterabschnitt verbunden sein.

Der Oberflächenbereich des jeweiligen wenigstens teilringartigen Erhebungselements kann im Vergleich zur übrigen Unterkontur der Aussparung erhaben, also höhenversetzt, angeordnet sein. Alternativ kann der jeweilige Oberflächenbereich in einer Ebene mit der übrigen Unterkontur der Aussparung angeordnet sein.

Denkbar ist auch, dass der Oberflächenbereich des jeweiligen Erhebungselements durch zwei oder mehr Erhebungen wenigstens teilweise umschlossen ist, wobei die Erhebungen miteinander verbunden sind. Die Erhebungen begrenzen den zugehörigen Oberflächenbereich wenigstens teilweise seitlich. Wenn das wenigstens teilringartige Erhebungselement nur durch eine einzige erste Erhebung gebildet ist, dann weist das Erhebungselement eine runde oder kreisartige Außenkontur als Erhebung auf. Die Erhebung weist dann also weder Anfang noch Ende auf. Wenn das wenigstens teilringartige Erhebungselement durch mehrere Erhebungen gebildet ist, die den zugehörigen Oberflächenbereich wenigstens teilumlaufend umgrenzen, dann weist das Erhebungselement eine polygonale Außenkontur auf, wobei benachbarte Erhebungen mit einem Winkel zueinander angeordnet sind.

Der Wortlaut "wenigstens teilringartig" bedeutet, dass die Erhebung der wenigstens einen Erhebung des jeweiligen Erhebungselements so gestaltet ist, dass sie zumindest teilweise einen ringartigen Bereich umschließt. Dabei muss der Oberflächenbereich nicht vollständig geschlossen sein, sondern kann an einer oder mehreren Stellen offen sein. Das bedeutet, dass das Erhebungselement zu mindestens einer Seite hin geöffnet sein kann, sodass kein vollständiger Ring entsteht, sondern nur ein Teil davon, der trotzdem eine ringartige Form andeutet. Dies erlaubt Flexibilität in der Gestaltung der Erhebungen, sodass sie nicht strikt geschlossen sein müssen, sondern auch in einer offenen, unvollständigen Form vorliegen können, solange die grundlegende ringartige Struktur zumindest teilweise vorhanden ist.

Eine "ringartige" Struktur ist also sowohl eine kreisrunde, kreisartige, insbesondere ellipsenförmige oder ovale, als auch eine mindestens dreieckige Außenform des Erhebungselements, wobei die Erhebung der wenigstens einen Erhebung des jeweiligen Erhebungselements den Oberflächenbereich vollumlaufend seitlich begrenzt bzw. umgibt. Bei mehreren Erhebungen ist also je eine Erhebung des Erhebungselements mit einem Winkel zu einer unmittelbar anschließenden bzw. darauffolgenden Erhebung angeordnet. Die Erhebungen gehen zur Bildung des Erhebungselements ineinander über. Die Erhebungen bilden die Außenkontur des Erhebungselements.

Eine Erhebung oder mehrere Erhebungen bilden zusammen mit dem zugehörigen Oberflächenbereich, insbesondere wenn der Oberflächenbereich im Vergleich zur Unterkontur der Aussparung erhaben ist, das Erhebungselement bzw. ein Strukturelement zum Schutz der Reifenschulter bei durchrutschenden Reifen in losem und/oder groben Schotter mit damit einhergehenden mechanischen Beschädigungen der Struktur des Fahrzeugluftreifens, insbesondere im Offshoulder-Bereich. Steine oder andere Objekte, die sich bei Fahrt in losem und/oder grobem Schotter seitlich am Fahrzeugluftreifen, insbesondere zwischen den blockartigen Profilsegmenten in der jeweiligen Aussparung, verhaken, drücken sich eher in die Erhebungselement und weniger oder erst später, also bei zunehmendem Druck, in das übrige Material des Laufstreifens. Ein Durchstoßen des Gummimaterials im Aussparungsbereich wird damit verhindert oder zumindest verzögert, da mehr Material zum Schutz des "Offshoulder"-Bereichs zur Verfügung steht.

Die jeweilige Erhebung des Erhebungselements ist als rippenartige Struktur bzw. Erhebung in der Aussparung zu verstehen. Die Erhebungselemente in der jeweiligen Aussparung erzeugen je nach Ausgestaltung und Anordnung zum einen keine engen Radien, welche parallel zur Rille verlaufen und zum anderen müssen sie nicht besonders hoch ausgeführt werden, um ihre Funktion zu erfüllen, was den Querschnitt der Aussparung nicht zu stark reduziert. Die Erhebungselemente können zufällig, nahezu zufällig oder in vordefinierter Anordnung zueinander in der Aussparung angeordnet sein. Damit ist die Unterkontur der Aussparung optimal vor Beschädigungen durch beispielsweise abrutschenden Steinen oder dergleichen geschützt.

Unter dem Wortlaut, wonach "wenigstens eine Erhebung eines ersten und/oder zweiten Erhebungselements zusammen mit der ersten oder zeiten Flanke einen Oberflächenbereich umschließt" sind mehrere Möglichkeiten der Anbindung der Erhebungen an die jeweilige Flanke zu verstehen. In einem ersten Ausführungsbeispiel kann eine Erhebung der wenigstens einen Erhebung des ersten Erhebungselements an die erste Flanke angebunden sein, während eine Erhebung der wenigstens einen Erhebung des zweiten Erhebungselements an die zweite Flanke angebunden ist. In einem zweiten Ausführungsbeispiel kann eine Erhebung der wenigstens einen Erhebung des ersten Erhebungselements an die erste Flanke angebunden sein, während eine Erhebung der wenigstens einen Erhebung des zweiten Erhebungselements an keine Flanke angebunden ist. In einem dritten Ausführungsbeispiel kann eine Erhebung der wenigstens einen Erhebung des zweiten Erhebungselements an die zweite Flanke angebunden sein, während eine Erhebung der wenigstens einen Erhebung des ersten Erhebungselements an keine Flanke angebunden ist. Jedenfalls ist wenigstens eines der Erhebungselemente eines Erhebungselementpaares über zumindest eine Erhebung an die erste oder zweite Flanke angebunden. Unter einer "Anbindung" ist in diesem Zusammenhang zu verstehen, dass die Erhebung in die jeweilige Flanke übergeht und einteilig damit ausgeformt ist.

Vorzugsweise kreuzt eine Erhebung der wenigstens einen Erhebung eines ersten Erhebungselements eine weitere Erhebung der wenigstens einen Erhebung eines zweiten Erhebungselements. Unter dem Wortlaut "sich kreuzen" ist zu verstehen, dass sich zwei Erhebungen von zwei überlagernden bzw. überlappenden Erhebungselementen unabhängig ihrer Erstreckungsart an einem Punkt oder einem Bereich der Unterkontur der Aussparung treffen und schneiden bzw. überschneiden. Dies bedeutet, dass die kreuzenden Erhebungen sich in einem oder mehreren Punkten berühren und durchdringen, wobei sich ihre Pfade überlagern. Der Winkel, in dem die Erhebungen zueinander angeordnet sind, ist jedenfalls größer als 0° und kleiner als 180°. Zwei sich kreuzende Erhebungen liegen also nicht übereinander bzw. aufeinander und erstrecken sich demnach auch nicht in identischer Weise, sondern sie überschneiden sich und verlaufen auf der Unterkontur der Aussparung in grundsätzlich verschiedene Richtungen. Insbesondere bilden zwei Erhebungen keine gemeinsame Kante zwei benachbarter Erhebungselemente.

Die wenigstens teilringartige Struktur der Erhebungselemente bewirkt, dass sich aufgrund der sich kreuzenden Erhebungen zwei unterschiedlicher Erhebungselemente ein Überschneidungsbereich ausbildet, der durch einen ersten Teilbereich des ersten Oberflächenbereichs des ersten Erhebungselements und einen den ersten Teilbereich überlagernden zweiten Teilbereich des zweiten Oberflächenbereichs des zweiten Erhebungselements gebildet wird. Anders gesagt sind die durch die Erhebungen wenigstens teilweise umschlossenen Oberflächenbereiche teilweise überlappend angeordnet. Dadurch kann das Risiko von Schäden am Fahrzeugluftreifen innerhalb der Aussparung durch Steine oder andere Objekte reduziert werden. Bei einer Vielzahl von Erhebungselementen innerhalb der jeweiligen Aussparung im Schulterabschnitt bildet sich eine netzartige Struktur. Daher ist selbstverständlich denkbar, dass auch mehr als zwei Erhebungselemente teilweise überlappend bzw. überlagernd angeordnet sind. In diesem Sinn kann eine Erhebung der wenigstens einen Erhebung eines ersten Erhebungselements auch eine Erhebung der wenigstens einen Erhebung eines separaten zweiten Erhebungselements sowie eine Erhebung der wenigstens einen Erhebung eines separaten dritten Erhebungselements kreuzen.

Vorzugsweise die Erhebungselemente jeweils durch mehrere mit einem Winkel zueinander angeordnete und einteilig verbundene, linienförmige Erhebungen ausgebildet sind. Die winklig zueinander angeordneten Erhebungen eines Erhebungselements sind in einem Ausführungsbeispiel über Ecken miteinander verbunden. Anders gesagt ist das jeweilige Erhebungselement eckig ausgeführt. Denkbar ist, dass das jeweilige Erhebungselement drei Ecken, vier Ecken, fünf Ecken, sechs Ecken oder mehr als sechs Ecken aufweist. Die Anzahl der Ecken hängt ab von dem vorhandenen Bauraum und der Anbindung an die jeweilige Rillenflanke.

Die jeweilige Erhebung der wenigstens einen Erhebung des jeweiligen Erhebungselements kann als Kante ausgeführt sein. Eine Kante ist in diesem Zusammenhang ein scharfer Übergang oder eine markante Linie oder Grat, die bzw. der zwei unterschiedliche Flächen oder Bereiche, nämlich die Unterkontur der jeweiligen Aussparung und den von der Erhebung wenigstens teilweise umschlossenen Oberflächenbereich, voneinander trennt. Sie ist durch eine sprunghafte Änderung im Gradient der Oberflächenstruktur und eine hohe Krümmung charakterisiert. Eine Kante ist demnach eine spezifische Form der Erhebung, die durch einen scharfen, gut definierten Übergang zwischen zwei Flächen oder Bereichen charakterisiert ist. Eine Erhebung der wenigstens einen Erhebung eines ersten Erhebungselements kann eine oder mehrere Erhebungen der wenigstens einen Erhebung eines zweiten Erhebungselements kreuzen.

Alternativ ist der jeweilige Oberflächenbereich zusätzlich durch wenigstens eine zweite Erhebung des jeweiligen Erhebungselements umschlossen, wobei eine zweite Erhebung der wenigstens einen zweiten Erhebung des ersten Erhebungselements eine zweite Erhebung der wenigstens einen zweiten Erhebung des zweiten Erhebungselements kreuzt. Anders gesagt kreuzt eine erste Erhebung der wenigstens einen Erhebung eines ersten Erhebungselements wenigstens eine erste Erhebung der wenigstens einen Erhebung eines zweiten Erhebungselements und eine zweite Erhebung der wenigstens einen Erhebung des ersten Erhebungselements kreuzt wenigstens eine zweite Erhebung der wenigstens einen Erhebung des zweiten Erhebungselements. Dies ist insbesondere realisierbar, wenn die beiden Erhebungselemente exakt oder in etwa gleich groß sind, wobei sich zwei Erhebungspaare der beiden überlappenden Erhebungselemente jeweils kreuzen.

Vorzugsweise ist ein erster Flächeninhalt des ersten Oberflächenbereichs ungleich einem zweiten Flächeninhalt des zweiten Oberflächenbereichs. Demnach sind die Erhebungselemente unterschiedlich groß ausgebildet. Der Begriff "Flächeninhalt" bezeichnet die Größe einer zweidimensionalen Fläche bzw. des Oberflächenbereichs, die bzw. der von einer geschlossenen Kontur oder einem Rand umschlossen ist. Damit können die erfindungsgemäßen Vorteile mit Hilfe von ungleichmäßig skalierten Erhebungselementen an der Unterkontur der jeweiligen Aussparung realisiert werden.

Bevorzugt das jeweilige Erhebungselement frei von Erhebungen ist, die eine gemeinsame Kante für zwei unmittelbar benachbarte Erhebungselemente bilden. Mit anderen Worten sind die Erhebungselemente separate Erhebungselemente, die sich keine Erhebungen bzw. Kanten mit anderen Erhebungselementen teilen.

Ferner bevorzugt weist die jeweilige Aussparung eine Profiltiefe zwischen 1 mm und 4 mm, vorzugsweise von 2 mm, auf. Je nach Anwendungsfall kann die bevorzugte Profiltiefe variieren. Vorzugsweise weist die Profiltiefe eine sich in axialer Richtung des Fahrzeugreifens ändernde Höhe auf. Die Profiltiefe der jeweiligen Aussparung nimmt bevorzugt vom seitlichen Rand der Bodenaufstandsfläche des Laufstreifens in Richtung zur zugehörigen Seitenwand ab. Die Profiltiefe kann dabei konstant, exponentiell oder stufenweise zur axialen Außenkante des Fahrzeugluftreifens abnehmen. Beispielsweise kann die Profiltiefe an einem Übergang zwischen dem Schulterabschnitt und der Seitenwand 1 mm und am Rand der Bodenaufstandsfläche des Laufstreifens 4 mm betragen.

Weiter bevorzugt weisen die Erhebungselemente eine Höhe zwischen 0,5 mm und 2,0 mm auf. Mit anderen Worten weist das jeweilige Erhebungselement vom Niveau des Rillengrundes ermittelt eine Höhe von mindestens 0,5 mm und höchstens 2,0 mm auf. Je nach Anwendungsfall und in Abhängigkeit der Profiltiefe ist auch die Höhe des jeweiligen Erhebungselements ausgewählt. Die Erhebungen aller Erhebungselemente können die gleiche Höhe aufweisen, sodass alle Erhebungselemente vom Niveau des Rillengrundes ermittelt die gleiche Höhe aufweisen. Beispielsweise weisen alle Erhebungselemente eine Höhe von 1,0 mm auf.

Alternativ weist die jeweilige Erhebung der wenigstens einen Erhebung des ersten Erhebungselements eine erste Höhe auf und die jeweilige weitere Erhebung der wenigstens einen Erhebung des zweiten Erhebungselements weist eine zweite Höhe auf, wobei die erste Höhe ungleich der zweiten Höhe ausgebildet ist. Demnach sind die Erhebungen der Erhebungselemente ausgehend vom Rillengrund unterschiedlich hoch ausgebildet. Ferner ist denkbar, einen Teil der Erhebungen gleich hoch und einen weiteren Teil der Erhebungen ungleich hoch auszubilden. Ungleichmäßig hohe Erhebungselemente können allein oder in Kombination mit Erhebungselementen, die unterschiedliche Flächeninhalte aufweisen, die erfindungsgemäßen Vorteile realisieren. Mithin kann der Materialaufwand zur Realisierung der Oberflächenstruktur an der Unterkontur der Aussparungen an die Anforderungen angepasst werden. Daraus ergeben sich praktisch unzählbar viele Gestaltungsmöglichkeiten für Erhebungselemente am Rillengrund.

Die jeweilige Aussparung kann ausgehend vom Rand der Bodenaufstandsfläche des Laufstreifens bis zur Seitenwand eine im Wesentlichen konstante Breite aufweisen. Die Profilsegmente im Schulterabschnitt sind dabei entsprechend ausgestaltet. Alternativ weist die jeweilige Aussparung eine sich vom seitlichen Rand der Bodenaufstandsfläche des Laufstreifens in Richtung zur jeweiligen Seitenwand vergrößernde Breite auf. Die Breite der jeweiligen Aussparung kann dabei konstant, exponentiell oder stufenweise zur axialen Außenkante des Fahrzeugluftreifens zunehmen. Mithin vergrößert sich ein Querschnitt der jeweiligen Aussparung vom seitlichen Rand der Bodenaufstandsfläche des Laufstreifens in Richtung zur jeweiligen Seitenwand.

Eines der wenigstens teilringartigen Erhebungselemente kann sich in axialer Richtung des Fahrzeugluftreifens bis in eine Umfangsrille und/oder Querrille des Laufstreifens erstrecken und gegebenenfalls an eine oder beide Rillenflanken der Umfangsrille bzw. Querrille angebunden sein. Demnach kann ein Teil eines Erhebungselements auch an den Rillengrund einer Umfangsrille und/oder Querrille angebunden bzw. angeformt sein.

Eines der wenigstens teilringartigen Erhebungselemente kann zu einer der Umfangsrille abgewandten Seite der Aussparung offenausgebildet sein, sodass das jeweilige Erhebungselement zwei freie und auslaufende Enden aufweist.

Es ist selbstverständlich denkbar, dass die Oberflächenstruktur weitere wenigstens teilringartige Erhebungselemente aufweist, wobei wenigstens eine Erhebung des weiteren Erhebungselements zusammen mit der ersten oder zweiten Flanke einen weiteren Oberflächenbereich umschließt, wobei die wenigstens eine Erhebung des weiteren Erhebungselements gegenüber dem von ihr und der ersten oder zweiten Flanke umschlossenen weiteren Oberflächenbereich sowie der Unterkontur hervorstehend ausgebildet ist, und wobei das jeweilige weitere Erhebungselement frei von Kreuzungen mit Erhebungen anderer Erhebungselemente ausgebildet sind. Demnach können zusätzlich zu den zuvor beschriebenen Erhebungselementpaaren mit sich kreuzenden Erhebungen weitere separate, wenigstens teilringartige Erhebungselemente angeordnet sein, um den Schutzeffekt gezielt und lokal zu verbessern. Obige Ausführungen zum ersten und zweiten Erhebungselement sind analog anwendbar.

Der Fahrzeugluftreifen kann vorteilhaft als Geländereifen, auch Offroad-Reifen genannt, als normaler PKW-Straßenreifen oder als sogenannter "All Terrain"-Reifen eingesetzt werden. All Terrain Reifen haben, insbesondere im Vergleich zu Geländereifen (auch Mud Terrain Reifen genannt), ein weniger aggressives Reifenprofil, was ihnen ermöglicht, trotz ihrer guten Geländeeigenschaften auch auf der Straße gute Fahreigenschaften zu bieten. Sie sind im Gelände den normalen Straßenreifen in der Performance, insbesondere der Traktion, überlegen und realisieren bei matschigen und schlammigen Bedingungen gute Fahreigenschaften. Demnach ist der erfindungsgemäße Fahrzeugluftreifen für Geländefahrzeuge wie Baumaschinen, Landmaschinen oder dergleichen geeignet, die sowohl im Gelände als auch auf der Straße bewegt werden.

Weitere Merkmale, Vorteile und Einzelheiten der Erfindung werden nun anhand der Zeichnungen, die ein bevorzugtes Ausführungsbeispiel der Erfindung zeigen, näher beschrieben. Dabei zeigen
- Fig. 1: eine erste schematische Perspektivdarstellung eines Laufstreifens eines erfindungsgemäßen Fahrzeugluftreifens gemäß einer bevorzugten Ausführungsform der Erfindung,
- Fig. 2: eine zweite schematische Perspektivdarstellung des Laufstreifens des erfindungsgemäßen Fahrzeugluftreifens gemäß Fig. 1, und
- Fig. 3: eine stark schematische Teilansicht einer Oberflächenstruktur der Unterkontur einer Aussparung an einem Schulterabschnitt des Laufstreifens nach Fig. 1 und Fig. 2.

Gemäß der Erfindung ausgeführte Fahrzeugluftreifen 1 sind Reifen für Kraftfahrzeuge, insbesondere für mehrspurige Kraftfahrzeuge, vorzugsweise Reifen für Offroad-, All Terrain- und Straßenanwendungen. Der Fahrzeugluftreifen 1 ist insbesondere für eine Baumaschine, eine Landmaschine oder dergleichen einsetzbar, die sowohl im Gelände als auch auf der Straße eingesetzt werden kann und unter beiden Bedingungen gute Fahreigenschaften besitzt. Ferner realisiert der Fahrzeugluftreifen 1 einen optimierten Schutz gegen Beschädigungen des Gummimaterials des Fahrzeugluftreifens 1, insbesondere an einem Schulterabschnitte 3 eines Laufstreifens 2.

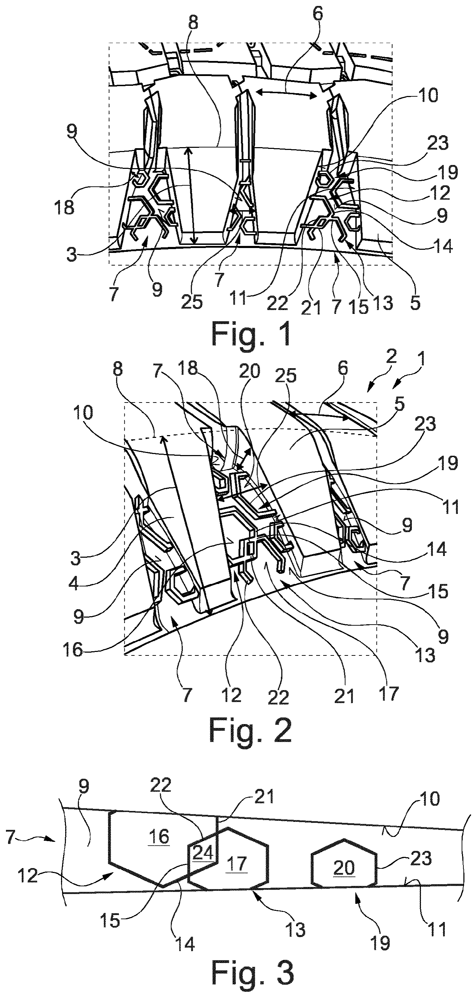

Fig. 1 und Fig. 2 zeigen einen Ausschnitt des Laufstreifens 2 des Fahrzeugluftreifens 1 aus unterschiedlichen Perspektiven. Der Laufstreifen 2 weist eine Bodenaufstandsfläche mit seitlichem Rand 8 sowie einen sich vom Rand 8 nach seitlich außen zu einer zugehörigen - hier nicht gezeigten - Seitenwand erstreckenden Schulterabschnitt 3 auf. Der Laufstreifen 2 kann mehrere - hier nicht gezeigte Umfangs- und/oder Querrillen aufweisen.

Der Schulterabschnitt 3 weist mehrere schulterseitige Profilsegmente 4, 5 auf, wobei in Umfangsrichtung 6 des Fahrzeugluftreifens 1 je zwei Profilsegmente 4, 5 durch eine Aussparung 7 voneinander getrennt sind. Die jeweilige Aussparung 7 trennt also eine Profilsegment 4 von einem in Umfangsrichtung darauffolgenden Profilsegment 5. Die jeweilige Aussparung 7 des Schulterabschnitts 3 ist radial und axial durch eine Unterkontur 9 bzw. Außenoberfläche sowie in Umfangsrichtung 6 durch an den benachbarten Profilsegmenten 4, 5 ausgebildete Flanken 10, 11 begrenzt. Gemäß Fig. 1 und Fig. 2 sind die Unterkonturen 9 der Aussparungen 7 ebenso wie die Profilsegmente 4, 5 nach radial und axial außen gewölbt und entsprechend gekrümmt ausgebildet. In diesem Ausführungsbeispiel sind zwei unterschiedlich ausgestaltete Aussparungen 7 dargestellt, die in Umfangsrichtung 6 alternierend vorgesehen sind. Alles zu den Aussparungen 7 Gesagte gilt trotz der unterschiedlichen Ausformung gleichermaßen für beide Arten der Aussparungen 7. Selbstverständlich ist denkbar, dass alle Aussparungen 7 über den Umfang verteilt identisch ausgebildet sind. Vorliegend ist lediglich eine Aussparung 7 bzw. die darin angeordneten Elemente mit Bezugszeichen versehen.

Eine Breite 25 der jeweiligen Aussparung 7 nimmt vom Rand 8 der Bodenaufstandsfläche des Laufstreifens 2 nach axial außen (in Fig. 1 nach unten bzw. in Fig. 2 nach rechts unten) zu. Die Profilsegmente 4, 5 sind entsprechend ausgestaltet. Außerdem nimmt eine Profiltiefe 18 der jeweiligen Aussparung 7 vom Rand 8 der Bodenaufstandsfläche des Laufstreifens 2 nach axial außen ab. Die Profiltiefe 18 beträgt dabei an der höchsten Stelle, hier im Bereich des Randes 8 der Bodenaufstandsfläche, höchstens 4 mm und an der niedrigsten Stelle, hier im Anbindungsbereich an die zugehörige Seitenwand des Fahrzeugluftreifens 1, mindestens 1 mm.

Die Unterkontur 9 der jeweiligen Aussparung 7 weist nach Fig. 1 bis Fig. 3 teilweise unter Anbindung an die erste Flanke 10 und teilweise unter Anbindung an die zweite Flanke 11 eine Oberflächenstruktur mit einer Vielzahl von - hier teilringartigen - Erhebungselementen 12, 13, 19 auf, wovon ein Teil der Erhebungselemente 12, 13 überlappend mit anderen Erhebungselementen 13, 12 und ein Teil der Erhebungselemente 19 separat angeordnet sind.

Die Erhebungselemente 12, 13, 19 sind in Form von abgeschnittenen Sechsecken ausgebildet, wovon ein Teil in die erste oder zweite Flanke 10, 11 übergeht bzw. angebunden ist und ein Teil am axialen Ende der jeweiligen Aussparung 7 ausläuft. Die Erhebungselemente 12, 13, 19 umfassen dabei jeweils mehrere linienförmige und in einem Winkel zueinander angeordnete Erhebungen bzw. Kanten, die teilweise zusammen mit der ersten oder zweiten Flanke 10, 11 einen jeweiligen Oberflächenbereich 16, 17, 20 wenigstens teilweise umschließen. Die Erhebungselemente 12, 13, 19 weisen vorliegend mindestens drei Ecken auf, welche die zugehörigen Erhebungen 14, 15, 21, 22, 23 miteinander verbinden. Die Erhebungen 14, 15, 21, 22, 23 der Erhebungselemente 12, 13, 19 sind gegenüber den von ihnen und gegebenenfalls der ersten oder zweiten Flanke 7, 8 jeweils wenigstens teilweise umschlossenen Oberflächenbereichen 16, 17, 20 sowie der Unterkontur 9 der Aussparung 7 hervorstehend ausgebildet.

Dies wird am Beispiel von Fig. 3 stark vereinfacht dargestellt, wonach drei exemplarische Erhebungselemente 12, 13, 19 jeweils als abgeschnittene Sechsecke dargestellt sind. Das erste und zweite Erhebungselement 12, 13 überlappen sich und bilden ein Erhebungselementpaar. Das dritte Erhebungselement 19 ist separat und beabstandet dazu angeordnet. Die erste Erhebung 14 des ersten Erhebungselements 12 bildet eine erste Kante des ersten Erhebungselements 12 und die erste Erhebung 15 des zweiten Erhebungselements 13 bildet eine erste Kante des zweiten Erhebungselements 13. Eine zweite Erhebung 21 des ersten Erhebungselements 12 bildet eine zweite Kante des ersten Erhebungselements 12 und eine zweite Erhebung 22 des zweiten Erhebungselements 13 bildet eine zweite Kante des zweiten Erhebungselements 13. Vorliegend kreuzen sich jeweils die ersten Kanten sowie die zweiten Kanten der beiden Erhebungselemente 12, 13. Dadurch wird ein Überschneidungsbereich 24 ausgebildet, der aus einem Teilbereich beider Oberflächenbereiche 16, 17 gebildet ist.

Neben der Vielzahl sich überlappender Erhebungselementpaare, die jeweils zumindest aus einem ersten und zweiten Erhebungselement 12, 13 bestehen, weist die Oberflächenstruktur, wie oben erwähnt, auch weitere ringartige und separate Erhebungselemente 19 in Form eines abgeschnittenen Sechsecks analog zum ersten und zweiten Erhebungselement 12, 13 auf, deren Erhebungen 23 jedoch frei von Kreuzungen mit anderen Erhebungen 14, 15, 21, 22 der Erhebungselementpaare ausgebildet sind. Die Erhebungen 23 sind ebenfalls linienförmig und mit einem Winkel zueinander angeordnet, sodass das weitere Erhebungselement 16 ebenfalls ein abgeschnittenes Sechseck andeutet. Die Erhebungen 23 des weiteren Erhebungselements 19 sind als Kanten ausgeführt, die gegenüber dem von ihnen wenigstens teilweise umschlossenen Oberflächenbereich 20 sowie der Unterkontur 9 hervorstehend ausgebildet sind. Auf der Unterkontur 9 im Bereich zwischen den blockartigen Profilsegmenten 4, 5 sind also eine Vielzahl von hexagonförmigen Erhebungselementen 12, 13, 19 angeordnet.

Die Erhebungselemente 12, 13, 19 sind vorliegend ungleich groß ausgebildet, wobei hier ein erster Flächeninhalt des ersten Oberflächenbereichs 16 größer als ein zweiter Flächeninhalt des zweiten Oberflächenbereichs 17 und größer als ein dritter Flächeninhalt des dritten Oberflächenbereichs 20 ist. Der zweite Flächeninhalt kann größer oder kleiner als der dritte Flächeninhalt ausgebildet sein. Die Erhebungselemente 12, 13, 19 sind vorliegend gleich hoch ausgebildet und weisen dabei je nach gewählter Profiltiefe 18 eine Höhe zwischen 0,5 mm und 2,0 mm, hier etwa 1,0 mm auf.

Für alle Erhebungselemente 12, 13, 19 gilt, dass keine Erhebungselemente 12, 13, 19 vorhanden sind, deren linienförmige Erhebungen 14, 15, 21, 22, 23 eine gemeinsame Kante für zwei unmittelbar benachbarte, abgeschnittene Sechsecke bilden. Mithin sind die Erhebungselemente 12, 13, 19 nicht unmittelbar aneinander angrenzend ausgebildet, sondern entweder beabstandet zueinander gemäß dem Erhebungselement mit dem Bezugszeichen 19 oder überlappend mit sich kreuzenden Erhebungen 14, 15, 21, 22 gemäß dem Erhebungselementpaar nach Fig. 3 mit den Bezugszeichen 12 und 13.

Aus Fig. 1 bis Fig. 3 geht hervor, dass die Erhebungselemente 12, 13, 19 in die Flanken 10, 11 bzw. die Profilsegmente 4, 5 übergehen bzw. einteilig damit verbunden sind, sodass keines der Erhebungselemente 12, 13, 19 jeweils vollständig als rippenartig ausgeführte Hexagon mit sechs Kanten ausgeformt ist. Vorliegend weisen die Erhebungselemente 9, 10, 16 mindestens drei, vorzugsweise vier oder fünf Ecken auf.

Die netzartige Oberflächenstruktur in der Aussparung 7 ist zum einen offen genug ausgeführt, um gute Traktionseigenschaften des Fahrzeugluftreifens 1 zu ermöglichen und ist zum anderen geschlossen genug ausgeführt, um größere Steine oder Objekte, welche üblicherweise die Schäden im Offshoulder-Bereich verursachen, vom Profiluntergrund, also der Unterkontur 9 fernzuhalten. Die Erhebungselemente 12, 13, 19 können als gleichmäßiges Raster auf der Unterkontur 9 ausgeführt sein, können aber auch als ungleichmäßig verteilte Hexagons ausgeführt sein. Zusätzlich könnten die hexagonförmigen Erhebungselemente 12, 13, 19 unterschiedlich hoch ausgebildet sein, was wiederum zu einer Verbesserung der Traktion führen kann. Eine ungleichmäßige Anordnung der Erhebungselemente 12, 13, 19 fördert ebenfalls die Möglichkeit des Verhakens im losen Untergrund.

### Bezugszeichenliste

- 1: Fahrzeugluftreifen
- 2: Laufstreifen
- 3: Schulterabschnitt
- 4: Erste Profilrippe
- 5: Zweite Profilrippe
- 6: Umfangsrichtung
- 7: Aussparung
- 8: Rand
- 9: Unterkontur der Aussparung
- 10: Erste Flanke
- 11: Zweite Flanke
- 12: Erhebungselement
- 13: Erhebungselement
- 14: Erhebung
- 15: Erhebung
- 16: Oberflächenbereich
- 17: Oberflächenbereich
- 18: Profiltiefe
- 19: Erhebungselement
- 20: Oberflächenbereich
- 21: Erhebung
- 22: Erhebung
- 23: Erhebung
- 24: Überschneidungsbereich
- 25: Breite

## Patentansprüche

1. Fahrzeugluftreifen (1), umfassend einen Laufstreifen (2) und Seitenwände, wobei der Laufstreifen (2) einen Schulterabschnitt (3) mit mehreren schulterseitigen Profilsegmente (4, 5) sowie je zwei in Umfangsrichtung (6) des Fahrzeugluftreifens (1) benachbarte Profilsegmente (4, 5) trennende Aussparungen (7) aufweist, wobei sich der Schulterabschnitt (3) vom seitlichen Rand (8) einer Bodenaufstandsfläche des Laufstreifens (2) in Richtung zur jeweiligen Seitenwand erstreckt, wobei die jeweilige Aussparung (7) des Schulterabschnitts (3) radial durch eine Unterkontur (9) und in Umfangsrichtung (6) durch an den benachbarten Profilsegmenten (4, 5) ausgebildete Flanken (10, 11) begrenzt ist, **dadurch gekennzeichnet, dass** die Unterkontur (9) der jeweiligen Aussparung (7) unter Anbindung an die erste und/oder zweite Flanke (10, 11) eine Oberflächenstruktur mit einer Vielzahl von wenigstens teilringartigen Erhebungselementen (12, 13) aufweist, wobei wenigstens eine Erhebung (14, 15) eines ersten und/oder zweiten Erhebungselements (12, 13) zusammen mit der ersten oder zeiten Flanke (10, 11) einen Oberflächenbereich (16, 17) umschließt, und wobei die wenigstens eine Erhebung (14, 15) des jeweiligen Erhebungselements (12, 13) gegenüber dem jeweiligen Oberflächenbereich (16, 17) sowie der Unterkontur (9) hervorstehend ausgebildet ist.

2. Fahrzeugluftreifen (1) nach Anspruch 1, **dadurch gekennzeichnet, dass** eine Erhebung (14) der wenigstens einen Erhebung (14, 15) eines ersten Erhebungselements (12) eine weitere Erhebung (15) der wenigstens einen Erhebung (14, 15) eines zweiten Erhebungselements (13) kreuzt.

3. Fahrzeugluftreifen (1) nach Anspruch 1 oder Anspruch 2, **dadurch gekennzeichnet, dass** die Erhebungselemente (12, 13) jeweils durch mehrere mit einem Winkel zueinander angeordnete und einteilig verbundene, linienförmige Erhebungen (14, 15) ausgebildet sind.

4. Fahrzeugluftreifen (1) nach Anspruch 2 in Verbindung mit Anspruch 3, **dadurch gekennzeichnet, dass** der jeweilige Oberflächenbereich (16, 17) zusätzlich durch wenigstens eine zweite Erhebung (21, 22) des jeweiligen Erhebungselements (12, 13) umschlossen ist, wobei eine zweite Erhebung (21) der wenigstens einen zweiten Erhebung (21, 22) des ersten Erhebungselements (12) eine zweite Erhebung (22) der wenigstens einen zweiten Erhebung (21, 22) des zweiten Erhebungselements (13) kreuzt.

5. Fahrzeugluftreifen (1) nach einem der vorhergehenden Ansprüche, **dadurch gekennzeichnet, dass** ein erster Flächeninhalt des ersten Oberflächenbereichs (16) ungleich einem zweiten Flächeninhalt des zweiten Oberflächenbereichs (17) ist.

6. Fahrzeugluftreifen (1) nach einem der vorhergehenden Ansprüche, **dadurch gekennzeichnet, dass** das jeweilige Erhebungselement (12, 13) frei von Erhebungen (14, 15, 21, 22) ist, die eine gemeinsame Kante für zwei unmittelbar benachbarte Erhebungselemente bilden.

7. Fahrzeugluftreifen (1) nach einem der vorhergehenden Ansprüche, **dadurch gekennzeichnet, dass** die jeweilige Aussparung (7) eine Profiltiefe (18) zwischen 1 mm und 4 mm aufweist.

8. Fahrzeugluftreifen (1) nach Anspruch 7, **dadurch gekennzeichnet, dass** die Profiltiefe (18) der jeweiligen Aussparung (7) vom seitlichen Rand (8) der Bodenaufstandsfläche des Laufstreifens (2) in Richtung zur jeweiligen Seitenwand abnimmt.

9. Fahrzeugluftreifen (1) nach Anspruch 7 oder Anspruch 8, **dadurch gekennzeichnet, dass** die Erhebungselemente (12, 13) eine Höhe zwischen 0,5 mm und 2,0 mm aufweisen.

10. Fahrzeugluftreifen (1) nach einem der vorhergehenden Ansprüche, **dadurch gekennzeichnet, dass** die Oberflächenstruktur weitere wenigstens teilringartige Erhebungselemente (19) aufweist, wobei wenigstens eine Erhebung (23) des weiteren Erhebungselements (19) zusammen mit der ersten oder zweiten Flanke (10, 11) einen weiteren Oberflächenbereich (20) umschließt, wobei die wenigstens eine Erhebung (23) des weiteren Erhebungselements (19) gegenüber dem von ihr und der ersten oder zweiten Flanke (10, 11) umschlossenen weiteren Oberflächenbereich (20) sowie der Unterkontur (9) hervorstehend ausgebildet ist, und wobei das jeweilige weitere Erhebungselement (19) frei von Kreuzungen mit Erhebungen (14, 15, 21, 22) anderer Erhebungselemente (12, 13) ausgebildet sind.
